# EUROPEAN PATENT SPECIFICATION

(11) **EP 0 333 819 B1**
(45) Date of publication and mention of the grant of the patent: **18.08.1993**
(21) Application number: 88908603.9
(22) Date of filing: 01.09.1988
(51) Int. Cl.: G01D 15/16, G01D 9/00, G03G 15/16, B41J 2/195

(54) **PLATEN ARRANGEMENT FOR HOT MELT INK JET APPARATUS**
DRUCKPLATTENVORRICHTUNG FÜR EINEN WÄRMEEMPFINDLICHEN TINTENSTRAHLDRUCKER
AGENCEMENT DE PLAQUE D'IMPRESSION POUR UNE IMPRIMANTE A JET D'ENCRE THERMOFUSIBLE

(30) Priority: 09.09.1987 US 94664
(43) Date of publication of application: 27.09.1989
(73) Proprietor: SPECTRA, INC., Hanover, NH 03755 (US)
(72) Inventor: SPEHRLEY, Charles, W., Jr., White River Junction, VT 05001 (US); CREAGH, Linda, T., West Lebanon, NH 03784 (US); SCHAFFER, Robert, R., Canaan, NH 03741 (US)
(74) Representative: Jackson, Peter Arthur
(86) International application number: PCT/US88/03074
(87) International publication number: WO 89/02576

(56) References cited:
- US-A- 4 140 907
- US-A- 4 462 035
- US-A- 4 593 292
- No further documents have been revealed.

## Description

This invention relates to ink jet systems and, more particularly, to a new and improved ink jet apparatus for use with hot melt inks providing controlled solidification of such inks.

Ink jet systems using inks prepared with water or other vaporizable solvents require drying of the ink (i.e., vaporization of the solvent) after it has been applied to a substrate, such as paper, which is supported by a platen. To facilitate drying of solvent-based inks, heated platens have previously been provided in ink jet apparatus.

Certain types of ink jet apparatus use inks, called "hot melt" inks, which contain no solvent and are solid at room temperature, are liquefied by heating for jet application to the substrate, and are resolidified by freezing on the substrate after application. In addition, the application of hot melt ink to a substrate by an ink jet apparatus transfers heat to the substrate. Moreover, the solidification of hot melt ink releases further thermal energy which is transferred to the substrate and supporting platen, which does not occur with the application of solvent-based inks. With high-density coverage this can raise the temperature of the paper and the platen above limits for acceptable ink penetration.

In order to control the penetration of hot melt inks into a permeable substrate such as paper to the desired extent, it is advantageous to preheat the substrate to a temperature close to but below the melting point of the hot melt ink. If the substrate temperature is too cold, the ink freezes after a short distance of penetration. This results in raised droplets and images with an embossed characteristic. Additionally, such ink droplets or images may have poor adhesion or may easily be scraped off or flake off by action of folding or creasing or may be subject to smearing or offsetting to other sheets. If the paper temperature is too high, for example, higher than the melting point of the ink, the ink does not solidify before it has penetrated completely through the paper, resulting in a defective condition called "print-through". In addition, an image printed on a substrate which is at a temperature in the vicinity of the melting point of the hot melt ink will appear noticeably different than an image printed at a lower substrate temperature. Such images exhibit characteristics of larger-than-normal spot size, fuzzy edges, blooming of fine lines and the like. Furthermore, contrary to the conditions required for the use of solvent-based inks in an ink jet apparatus, heating of the substrate after the ink has been deposited is ineffective to control the spread of the drops and to prevent the above-mentioned difficulties which may occur when using hot melt inks. Consequently, presently known ink jet apparatus using unheated or even heated-only platens are incapable of maintaining the conditions required for effective application of hot melt ink to a substrate to produce constant high-quality images.

Accordingly, it is an object of the present invention to provide a new and improved ink jet apparatus which is effective to overcome the above-mentioned disadvantages of the prior art.

Another object of the present invention is to provide an ink jet apparatus which is especially adapted for use with hot melt inks.

According to the present invention, an ink jet apparatus comprises an ink jet head for projecting drops of molten hot melt ink on to a substrate, a platen for supporting the substrate during the operation of the ink jet head, and a temperature control means for affecting the temperature of the platen to maintain, in use, the substrate at a temperature suitable for solidification of the ink drop; characterised in that the temperature control means comprises a sensor for sensing incipient changes in the platen temperature, temperature adjusting means including heating means and/or cooling means for adjusting the temperature of the platen, and a temperature control unit responsive to the sensor and controlling the temperature adjusting means whereby the temperature of the platen is controlled so as to maintain the substrate substantially at a selected temperature irrespective of variations in thermal energy applied to the substrate in the ink drops.

In the accompanying drawings:
Fig. 1 is a graphical representation showing the heat input to a platen supporting a sheet substrate being printed with an ink jet for various sheet printing times and print coverage values;
Fig.2 is a schematic sectional view illustrating a representation temperature-controlled platen arrangement in accordance with the present invention;
Fig.3 is a schematic sectional view taken along the lines III-III of Fig. 2 and looking in the direction of the arrows;and
Fig. 4 is a schematic sectional view illustrating another embodiment of the invention and showing the energy flux into and out of the paper and platen system.

In ink jet printing, the spot size on the paper depends on the initial drop volume and the degree to which this drop interacts with the substrate, said interaction affecting the degree of spread. In water-based ink jet systems, the ink wets the fibers and the drop tends to spread until fully absorbed by the fibers. This is generally considered a deficiency, since the absorbing characteristics of a range of plain papers is so great as to produce widely different print characteristics on different papers. In hot melt ink printing systems, the ink also wets the paper fibers, but the drop spread is limited by the cooling of the ink, which shares its thermal energy with the paper fibers until it freezes or until its viscosity becomes so high as to limit spreading motion. Fortunately, most papers have reasonably similar specific heats so that the drop spread is determined largely by the initial temperature of the ink drop and paper substrate in relation to the solidification temperature of the ink. As a consequence of the similarity of thermal characteristics of papers, similar images may be obtained on different papers if the substrate temperature is properly controlled.

In hot melt ink jet printers, the thermal energy applied to a unit area of a substrate such as paper depends upon the temperature of the hot melt ink when it reaches the substrate, the energy of solidification of the hot melt ink and the coverage of the substrate with ink during the printing. The temperature of the substrate immediately after printing depends upon the thermal energy applied during printing, the initial temperature of the substrate, and the temperature of a heat-conductive element such as a platen with which the substrate is in heat transfer relation.

Thus, a hot melt ink which solidifies at a selected temperature below the temperature at which it is applied to the substrate may solidify almost immediately if the substrate and its supporting platen are at a low temperature, substantially below the selected temperature, which may occur during start-up of the system. Such immediate solidification prevents sufficient penetration of the hot melt ink into the substrate before it solidifies. On the other hand, if the substrate and its supporting platen are at a temperature close to or above the solidification temperature of the hot melt ink, a relatively long time, such as several seconds, may be required for solidification, thereby permitting uncontrolled drop spread or print-through of the printed image. For example, a modern high-speed hot melt printer with a 96-jet head applying two layers of ink drops of different colors at a temperature of 130°C to a substrate at a rate of 12,000 drops per second per jet with a linear density of 11.8 dots per mm, providing a total ink thickness of 0.023mm, raises the bulk temperature of a 0.1mm paper substrate by about 21°C during the printing operation. With continued printing of a substrate which moves over a fixed platen in that manner, the platen temperature soon reaches a level approaching or above the solidification point of the hot melt ink.

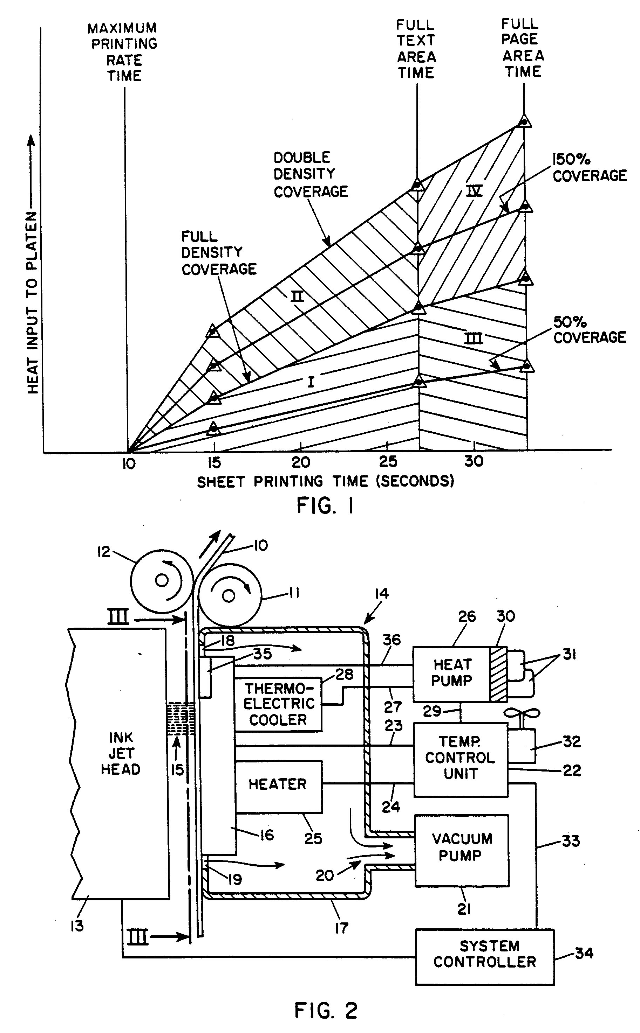

Fig. 1 of the accompanying drawings illustrates schematically in graphical form the heat energy applied to a supporting platen when an 21.6cm x 27.9cm paper sheet moving across the platen is being printed with hot melt ink.

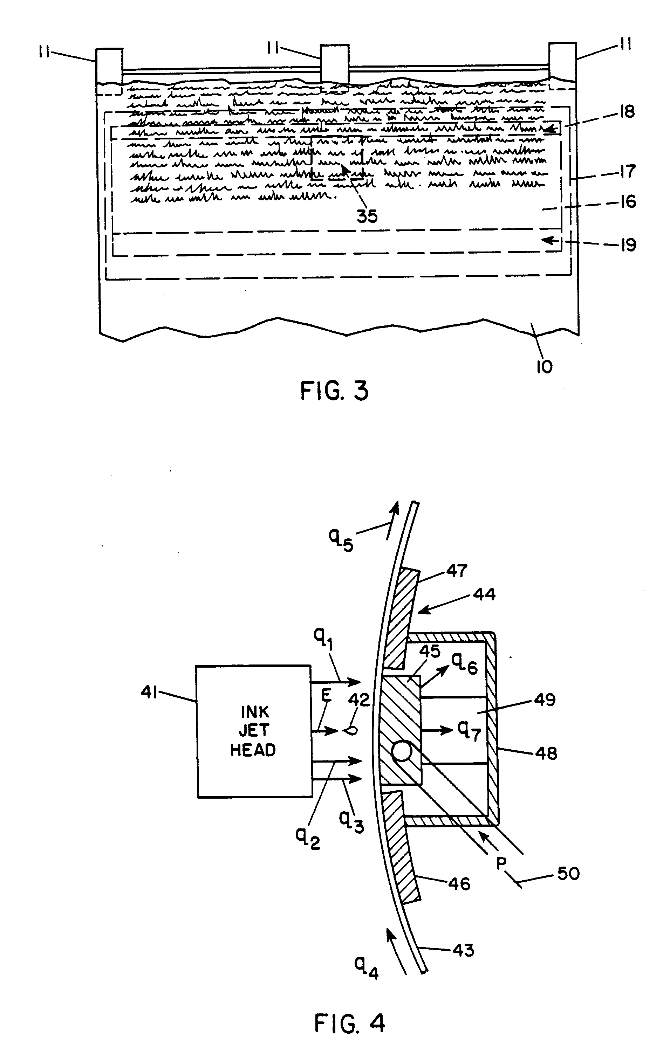

As described hereinafter with reference to Fig. 4, there are a plurality of energy fluxes which determine whether there is a net heat input to the paper/platen system, in which case the temperature will tend to rise, or whether there is a net heat outflow from the paper/platen system, in which case the temperature in the printing zone will decrease. Heat energy is inputted to the system by heat transfer from the heated printhead across the airgap via conduction, convection and radiation, by the enthalpy in the ink drops, by the optional electrical power provided selectively by the heater controller, and by the heat content of the paper which enters the system. Energy outflow from the system includes heat energy in the paper and ink (which exits at a temperature higher than the paper's input temperature), heat transfer from the platen and from the paper which is not covered by the printhead to the surrounding air via convection, heat transferred from the platen to the surrounding structure via conduction through mounts and/or selectively via heat pump action of thermoelectric coolers.

As shown in Fig. 1, the heat input, represented by the ordinate in the graph, increases with increasing sheet printing time and with increasing percent coverage of the substrate. In this illustration, typical sheet printing times from about 10 seconds minimum to about 33 seconds maximum are shown and, as shown in the graph, the highest net heat input occurs at the slowest sheet printing time because the slowly moving sheet removes less thermal energy from the paper/platen system than is delivered by the enthalpy in the hot ink drops and by thermal transfer from the printhead to the paper/platen system.

Similarly, at any given sheet printing time, the heat input to the platen increases with increasing printing coverage, which is the percentage of sheet area covered by ink. Where two or more different colored inks are applied, the colored inks usually overlie each other at least to some extent. Consequently, the graphical illustration in Fig. 1 illustrates the heat input to the platen not only for 50% and 100% sheet coverage, but also for sheet coverage in excess of 100%, such as 150% and 200%, which corresponds to coverage of the entire sheet by two layers of ink. In general, sheets with lower coverage require less printing time.

Fig. 1 illustrates heat input to the platen under various printing conditions in four sections labelled I, II, III and IV. Section I shows the heat input to the platen when printing the 17.8cm x 22.9cm normal full text area of an 21.6cm x 27.9cm sheet with up to full density with a single layer of hot melt ink. When up to two full layers of hot melt ink are applied in overlying relation to the sheet during color printing, the heat energy transferred to the platen is illustrated in the section designated II. In that case, as shown in Fig. 1, up to twice the heat energy is transferred to the platen.

The section designated III in Fig. 1 illustrates the heat input to the platen when printing a single layer of ink at up to full density on a "full page" area of an 21.6cm x 27.9cm sheet, i.e., to within 0.965cm of the top left and bottom edges and within 0.25cm of the right edge of the sheet, and the section designated IV illustrates the heat input for full-page area printing with up to a double layer of hot melt ink. With color printing of solid area patterns, such as pie charts or the like, operation is frequently in the region designated III and IV, providing very high thermal energy input to the platen.

The platen temperature depends not only on the rate of heat input, but also on the rate of removal of heat energy from the platen. To maintain a selected platen temperature assuring proper operation of a hot melt ink jet apparatus, especially under conditions such as are shown in sections III and IV, therefore, heat energy must be removed rapidly and efficiently from the platen. It has been found that removal of the heat energy from a platen by conduction or convection to a moving air stream may be inadequate, especially when the local ambient air temperature rises to within 5° or 10°C of the operating set point. At these and other times, the system is incapable of sufficiently precise control to maintain the platen temperature within desired limits for optimum operation.

For example, on initial start-up, a conductively or convectively cooled platen will be at room temperature (i.e., 21°C) whereas, in order to allow sufficient penetration of a hot melt ink into a fibrous substrate such as paper prior to solidification, it is desirable to maintain the substrate at about 40°C. On start-up, therefore, the addition of heat to the platen is necessary. On the other hand, when continuous printing of the type described above occurs using hot melt ink at 130°C, for example, the platen temperature quickly reaches and exceeds 40°C and approaches the solidification temperature of the hot melt ink, thereby requiring removal of heat from the platen. Furthermore, frequent and extreme changes in the printing rate such as occur in the reproduction of solid-colored illustrations such as pie charts intermittently with single-color text will cause corresponding extreme fluctuations in the temperature of the platen and the substrate being printed, resulting in alternating conditions of print-through and insufficient ink penetration into the substrate.

In the representative embodiment of the invention illustrated in Figs. 2 and 3, the platen temperature of a hot melt ink jet apparatus is maintained at a desired level to provide continuous optimum printing conditions. As shown in Fig. 2, a sheet or web 10 of a substrate material such as paper is driven by a drive system including a set of drive rolls 11 and 12 which rotate in the direction indicated by the arrows to move the substrate material through the gap between an ink jet head 13 and a platen assembly 14. The ink jet head is reciprocated perpendicularly to the plane of Fig. 2 so as to project an array of ink jet drops 15 onto the surface of the substrate in successive paths extending transversely to the direction of motion of the web 10 in a conventional manner. The platen assembly 14 includes a platen 16 mounted in a housing 17 having slit openings 18 and 19 at the upper and lower edges of the platen 16 and an exhaust outlet 20 at the rear of the housing leading to a vacuum pump 21 or blower. The housing 17 may be substantially airtight, or for purposes of substantially continuous heat removal to the air, even when paper covers the face openings, additional air ports may be provided. As best seen in Fig. 3, the platen 16 and the adjacent vacuum slits 18 and 19 extend substantially across the width of the web 10 of substrate material and the web is driven by three drive rolls 11 which form corresponding nips with adjacent pinch rolls 12, one of which is shown in Fig. 2.

To assure that the temperature of the substrate 10 is maintained at the desired level to permit sufficient penetration of the hot melt ink drops 15 without permitting print-through, a temperature control unit 22 detects the temperature of the platen 16 through a line 23. If it is necessary to heat the platen to maintain the desired platen temperature, for example, on start-up of the apparatus or when printing at low coverage or with low sheet printing times, the control unit 22 supplies power through a line 24 to a conventional resistance-type heater or thermistor 25 to heat the platen until it reaches the desired temperature of operation.

In addition, an electrical heat pump 26 is connected by a line 27 to a thermoelectric cooler 28, for example, of the type designated CP 1.0-63-06L, available from Melcor, which is in thermal contact with the platen 16. When the temperature control unit 22 detects a platen temperature above the desired level resulting, for example, from printing at high coverage or with high sheet printing times, it activates the heat pump through a line 29 to transfer thermal energy from the thermoelectric cooler 28 through the line 27 to the pump which in turn transfers thermal energy to a heat sink 30. The heat sink 30, which may, for example, be a structural support member for the entire platen assembly, has fins 31 for radiative and convective heat dissipation and is provided with a forced air cooling arrangement 32 to assure a high enough rate of heat removal to permit the heat pump 26 to maintain the desired platen temperature. If extreme conditions are encountered in which the heat energy is supplied to the web 10 and the platen 16 by the ink jet head 13 at a rate which exceeds the capacity of the thermoelectric cooler 28 and the heat pump 26 to maintain the desired temperature, the control unit 22 may send a command signal through a line 33 to an ink jet system control device 34 which will reduce the rate at which ink drops are applied by the ink jet head 13 to the web 10 until the heat pump 26 is again able to maintain a constant platen temperature.

Although the platen temperature is thus controlled to assure prompt solidification of the ink drops in the array 15 after sufficient penetration into the substrate 10, the temperature of the solidified ink drops may not be low enough when the substrate reaches the nip between the drive rolls 11 and the pinch rolls 12 to prevent offsetting of ink onto the pinch roll 12 opposite the center drive roll 11 shown in Fig. 3. To avoid that possiblity, a small quench zone is provided by another thermoelectric cooler 35 connected by a line 36 to the heat pump 26 which is arranged to maintain a temperature in that zone at least 10°C lower than the temperature of the platen 16 in order to assure complete solidification of the ink in that zone.

As shown in Fig. 3, the thermoelectric cooler 35 is aligned with the drive roll 11 and its associated pinch roll so that the strip of the web 10 which passes between those rolls is cooled by the element 35. At the edges of the web 10, on the other hand, the other drive rolls 11 and their associated pinch rolls are positioned in a narrow margin in which no printing occurs. Consequently, quenching is unnecessary in those regions.

In another platen embodiment, the quench zone downstream of the temperature-controlled platen may be provided completely across the width of the paper. Said quench zone may be, for example, a portion of the platen support member which has adequate heat sink capability.

In operation, the platen 16 is heated if necessary by the heater 25 to raise it to the desired temperature, such as 40°C. The vacuum pump 21 exhausts air from the housing 17 and draws air through the apertures 18 and 19, as indicated by the arrows in Fig. 2, to hold the web 10 in thermal contact with the platen 16 as it is advanced by the drive rolls 11 and associated pinch rolls 12. The ink jet head 13 sprays hot melt ink 15 onto the web 10 and the resulting increase in platen temperature is detected by the control unit 22, causing the heat pump 20 to transfer thermal energy from the thermoelectric cooler 28 to the heat sink 30 and the fins 31 from which it is removed by the forced-air cooling system 32.

For conventional hot melt inks, the ink jet head 13 maintains the ink at a jetting temperature of, for example, 130°C, but the ink solidifies at, for example, 60°C and, to assure solidification after the desired degree of penetration but before print-through occurs, the platen 16 should be maintained within about 3°-5°C of a selected lower temperature, for example, 40°C. During normal operation of the ink jet apparatus, however, the ambient temperature of the platen assembly 14 and its surrounding components may be at or above 40°C. Accordingly, the heat pump 26 may be arranged to transfer heat continuously from the thermoelectric coolers 28 and 32 to the heat sink 30 even during quiescent periods in the operation of the system. During ink jet operation, moreover, especially operation in regions II and IV in Fig. 1, substantially more heat is extracted from the platen and transferred to the heat sink 30, which may thus be heated to a relatively high temperature of, for example, 60-65°C, and the heat energy is removed from the heat sink 30 and the fins 31 by the forced-air system 32. At the same time, the thermoelectric cooler 32 in the quench zone is maintained about 10°C cooler than the rest of the platen, for example, at 30°C, assuring complete solidification of ink before engagement by a pinch roll.

Because the size and nature of the printed image may vary widely, it is necessary to use a temperature-controlled platen with high lateral thermal conductivity in order to minimize temperature gradients from one side to the other. Aluminum and copper are suitable platen materials, but the cross-sectional area of the platen must be significant, on the order of 3.2 square cm or larger in the case of aluminum. Such platens are massive and may take much space and require high power or long times to heat up to operating temperature. For these reasons, a structure embodying the characteristics of a heat pipe with evaporation and condensation of liquid to transfer energy may be employed.

Other problems may occur in the control of the web as it moves across the platen in the print zone. One such problem relates to differential thermal expansion of film media (e.g., Mylar™) and another relates to differential shrinkage of paper as it is heated and dried by the platen. In these cases, the web may buckle or cockle and move off the platen surface by 0.13mm or more, which degrades the thermal connection between paper and platen and which also degrades dot placement accuracy by changing the point of impact of the jets, especially in the case of bidirectional printing.

To avoid these problems, the platen configuration shown in Fig. 4 may be used. In this arrangement, an ink jet head 41 projects ink drops 42 toward a web of paper 43 supported by a curved platen 44 which causes the paper 43 to be held in curved configuration and thereby stiffened against buckling and cockling. A suitable curved platen 44 has a radius of curvature of about 125 to 250 mm (5 to 10 inches) has a temperature-controlled portion 45 of the type described with reference to Fig. 2 in the printing zone and a curved inlet portion 46 and a curved outlet portion 47. The inlet and outlet portions 46 and 47 extend at least 10° ahead of and 10° after the temperature-controlled portion 45. Thus, the temperature-controlled portion need not extend for the entire length of the curved paper path, but may occupy only about 1.27mm of paper length, the inlet portion 46 and outlet portion 47 of the curved paper path being at temperatures which are more suitable for paper handling or quenching prior to passing into paper feed rolls of the type shown in Fig. 2. A housing 48 encloses the temperature-control zone for the platen 45 and a temperature-control component 49 which may include a thermoelectric cooler of the type described with reference to Fig. 2 are mounted in contact with the platen 45 in the temperature-control zone. A power line 50 energizes the heater in the portion 45 when it is necessary to add heat to the platen.

In the arrangement shown in Fig. 4, the energy flux into and out of the paper/platen system is represented as follows:

### Energy Flux Into Paper/Platen System

- q₁ =: radiant heat transfer from ink jet head 41.
- q₂ =: conduction through the air.
- q₃ =: convection from ink jet head 41 to platen.
- E =: enthalpy in the ink drops.
- q₄ =: heat energy in entering paper at temperature Tᵢₙ.
- p =: heat transferred by heater into platen.

### Energy Flux Out of Paper/Platen System

- q₅ =: heat energy exiting with the paper and ink at temperature Tₒᵤₜ.
- q₆ =: heat energy removed from platen by convective heat transfer to the air.
- q₇ =: heat removed from platen by conduction through mounts and/or by heat pump action.

## Claims

1. An ink jet apparatus comprising an ink jet head (13) for projecting drops (15) of molten hot melt ink on to a substrate (10; 43), a platen (16) for supporting the substrate during the operation of the ink jet head, and a temperature control means (22,23,24,28) for affecting the temperature of the platen to maintain, in use, the substrate at a temperature suitable for solidification of the ink drop; characterised in that the temperature control means comprises a sensor (23) for sensing incipient changes in the platen temperature, temperature adjusting means (25,28) including heating means and/or cooling means for adjusting the temperature of the platen, and a temperature control unit (22) responsive to the sensor (23) and controlling the temperature adjusting means (25,28) whereby the temperature of the platen is controlled so as to maintain the substrate substantially at a selected temperature irrespective of variations in thermal energy applied to the substrate in the ink drops.

2. An apparatus according to claim 1, wherein the cooling means (26,28) includes a heat pump (26; 45) for removing heat from the platen.

3. An apparatus according to claim 2, wherein the heat pump (26,28) includes thermoelectric cooler (28) in thermal contact with the platen (16).

4. An apparatus according the claim 1 or claim 2, including an electrical heater (25) responsive to the temperature control means (22,23,24,28) for heating the platen (16) when the temperature of the platen is below a desired level.

5. An apparatus according to any one of the preceding claims, including pinch roll drive means (12) for moving the substrate (10) with respect to the ink jet and the platen (16) and wherein the temperature adjusting means includes second thermoelectric cooler means (35) disposed in aligned relation with the pinch roll means (12) in the direction of motion of the substrate to quench hot melt ink applied to a portion of a substrate prior to engagement by the pinch roll means.

6. An apparatus according to any one of the preceding claims, including an air-tight housing (17) surrounding the platen (16) , a vacuum pump (21) communicating with the interior of the airtight housing means, and an aperture (18,19) provided in the airtight housing (17) for retaining the substrate in thermal contact with the platen.

7. An apparatus according to any one of the preceding claims, including a heat sink (30) in thermal contact with the heat pump (28) to receive and dissipate heat therefrom.

8. An apparatus according to claim 7, wherein the heat sink (30) comprises a structural member supporting the platen and includes forced air cooling means (32) for cooling the heat sink.

9. An apparatus according to claim 7 or claim 8, wherein the heat sink (30) is provided with fins (31) to facilitate cooling of the heat sink.

10. An apparatus according to any one of the preceding claims, including a system control means (34) for controlling the operation of the ink jet and being responsive to a control signal from the temperature control means to change the rate of operation of the ink jet means.

11. An apparatus according to any one of the preceding claims, wherein the platen includes a curved platen surface (44) and means for retaining the substrate in contact with the curved platen surface.

12. An apparatus according to claim 11, wherein the curved platen surface (44) has a radius of curvature between about 12.7cm and about 25.4cm and extends at least about 10° ahead of and 10° after the location of the heat pump (45).

13. An apparatus according to any one of the preceding claims, wherein the temperature control means (22,23,24,28) maintains the temperature of the platen (16) at a selected temperature below the melting point of the hot melt ink.

14. An apparatus according to claim 13, where the selected temperature is about 20°C to 30°C below the melting point of the hot melt ink.

15. An apparatus according to any one of the preceding claims, wherein the melting point of the hot melt ink is approximately 60°C.

16. An apparatus according to any one of claims 1 to 14, wherein the selected temperature is approximately 40°C.

## Patentansprüche

1. Eine Tintenstrahlvorrichtung umfassend einen Tintenstrahlkopf (13) zum Ausstoßen von Tropfen (15) geschmolzener Heißschmelz-Tinte auf eine Unterlage (10; 43), eine Druckplatte (16) zum Abstützen der Unterlage während des Betriebes des Tintenstrahlkopfes und eine Temperatursteuerungseinrichtung (22, 23, 24, 28) zum Beeinflussen der Temperatur der Druckplatte, um bei der Verwendung die Unterlage bei einer Temperatur aufrechtzuerhalten, die zur Erstarrung des Tintentropfens geeignet ist; dadurch gekennzeichnet, daß die Temperatursteuerungseinrichtung einen Meßfühler (23) zum Erfassen von beginnenden Änderungen der Druckplattentemperatur, eine Temperatureinstelleinrichtung (25, 28), die eine Heizeinrichtung und/oder Kühleinrichtung zum Einstellen der Druckplattentemperatur einschließt, und eine Temperatursteuerungseinheit (22) aufweist, die auf den Meßfühler (23) anspricht und die Temperatureinstelleinrichtung (25, 28) steuert, wodurch die Temperatur der Druckplatte so gesteuert wird, daß die Unterlage im wesentlichen auf einer ausgewählten Temperatur unabhängig von Änderungen der Wärmeenergie aufrechterhalten wird, die auf die Unterlage in den Tintentropfen aufgebracht wird.

2. Eine Vorrichtung gemäß Anspruch 1, bei der die Kühleinrichtung (26, 28) eine Wärmepumpe (26; 45) zur Wärmeabfuhr von der Druckplatte einschließt.

3. Eine Vorrichtung gemäß Anspruch 2, bei der die Wärmepumpe (26, 28) eine thermoelektrische Kühleinrichtung (28) in Wärmeberührung mit der Druckplatte (16) einschließt.

4. Eine Vorrichtung gemäß Anspruch 1 oder Anspruch 2, die eine elektrische Heizeinrichtung (25) einschließt, die auf die Temperatursteuerungseinrichtung (22, 23, 24, 28) zum Heizen der Druckplatte (16) anspricht, wenn die Temperatur der Platte unterhalb eines erwünschten Wertes ist.

5. Eine Vorrichtung gemäß irgendeinem der vorhergehenden Ansprüche, die eine Andruckrollen-Antriebseinrichtung (12) zum Bewegen der Unterlage (10) in bezug auf den Tintenstrahl und die Druckplatte (16) einschließt, und bei der die Temperatureinstelleinrichtung eine zweite, thermoelektrische Kühleinrichtung (35) einschließt, die in ausgerichteter Beziehung zu der Andruckrolleneinrichtung (12) in der Bewegungsrichtung der Unterlage angeordnet ist, um Heißschmelz-Tinte, die auf einen Bereich einer Unterlage aufgebracht worden ist, vor Eingriff mit der Andruckrolleneinrichtung abzukühlen.

6. Eine Vorrichtung gemäß irgendeinem der vorhergehenden Ansprüche, die ein luftdichtes, die Druckplatte (16) umgebendes Gehäuse (17), eine mit dem Inneren der luftdichten Gehäuseeinrichtung in Verbindung stehende Unterdruckpumpe (21) und eine in dem luftdichten Gehäuse (17) vorgesehene Öffnung (18, 19) einschließt, um die Unterlage in Wärmeberührung mit der Druckplatte zurückzuhalten.

7. Eine Vorrichtung gemäß irgendeinem der vorhergehenden Ansprüche, die eine Wärmesenke (30) in Wärmeberührung mit der Wärmepumpe (28) einschließt, um von ihr Wärme aufzunehmen und abzuleiten.

8. Eine Vorrichtung gemäß Anspruch 7, bei der die Wärmesenke (30) ein strukturelles Element umfaßt, das die Druckplatte hält, und eine Zwangsluftkühleinrichtung (32) zum Kühlen der Wärmesenke einschließt.

9. Eine Vorrichtung gemäß Anspruch 7 oder Anspruch 8, bei der die Wärmesenke (30) mit Lamellen (31) versehen ist, um das Kühlen der Wärmesenke zu erleichtern.

10. Eine Vorrichtung gemäß irgendeinem der vorhergehenden Ansprüche, die eine System-Steuerungseinrichtung (34) zum Steuern des Betriebes des Tintenstrahles einschließt und auf ein Steuersignal von der Temperatursteuerungseinrichtung anspricht ist, um die Betriebsgeschwindigkeit der Tintenstrahlvorrichtung zu ändern.

11. Eine Vorrichtung gemäß irgendeinem der vorhergehenden Ansprüche, bei der die Druckplatte eine gekrümmte Druckplattenoberfläche (44) und eine Einrichtung zum Zurückhalten der Unterlage in Berührung mit der gekrümmten Druckplattenoberfläche einschließt.

12. Eine Vorrichtung gemäß Anspruch 11, bei der die gekrümmte Druckplattenoberfläche (44) einen Krümmungsradius zwischen ungefähr 12,7 cm und ungefähr 25,4 cm aufweist und sich über wenigstens ungefähr 10° vor und 10° hinter dem Ort der Wärmepumpe (45) erstreckt.

13. Eine Vorrichtung gemäß irgendeinem der vorhergehenden Ansprüche, bei der die Temperatursteuerungseinrichtung (22, 23, 24, 28) die Temperatur der Druckplatte (16) auf einer ausgewählten Temperatur unterhalb des Schmelzpunktes der Heißschmelz-Tinte aufrechterhält.

14. Eine Vorrichtung gemäß Anspruch 13, bei der die ausgewählte Temperatur bei ungefähr 20°C bis 30°C unterhalb des Schmelzpunktes der Heißschmelz-Tinte ausgewählt ist.

15. Eine Vorrichtung gemäß irgendeinem der vorhergehenden Ansprüche, bei der der Schmelzpunkt der Heißschmelz-Tinte ungefähr 60°C ist.

16. Eine Vorrichtung gemäß irgendeinem der Ansprüche 1 bis 14, bei der die ausgewählte Temperatur ungefähr 40°C ist.

## Revendications

1. Appareil à jets d'encre comprenant une tête (13) à jets d'encre destinée à projeter des gouttes (15) d'une encre thermofusible fondue sur un substrat (10 ; 43), un support d'impression (16) destiné à supporter le substrat pendant le fonctionnement de la tête à jets d'encre, et un dispositif (22, 23, 24, 28) de réglage de température destiné à affecter la température du support d'impression afin que, pendant l'utilisation, le substrat soit maintenu à une température qui convient à la solidification de la goutte d'encre, caractérisé en ce que le dispositif de réglage de température comporte un capteur (23) destiné à détecter les variations imminentes de la température du support d'impression, un dispositif (25, 28) d'ajustement de température qui comporte un dispositif de chauffage et/ou un dispositif de refroidissement destiné à ajuster la température du support d'impression, et un ensemble (22) de réglage de température commandé par le capteur (23) et commandant le dispositif (25, 28) d'ajustement de température de manière que la température du support d'impression soit réglée et que le substrat soit maintenu pratiquement à une température choisie indépendamment des variations de la quantité d'énergie thermique appliquée au substrat dans les gouttes d'encre.

2. Appareil selon la revendication 1, dans lequel le dispositif de refroidissement (26, 28) comporte une pompe à chaleur (26 ; 45) destinée à extraire de la chaleur du support d'impression.

3. Appareil selon la revendication 2, dans lequel la pompe à chaleur (26, 28) comporte un refroidisseur thermoélectrique (28) qui est en contact thermique avec le support d'impression (7).

4. Appareil selon la revendication 1 ou 2, comprenant un organe électrique de chauffage (25) commandé par le dispositif (22, 23, 24, 28) de réglage de température et destiné à chauffer le support d'impression (16) lorsque la température du support d'impression est inférieure à un niveau voulu.

5. Appareil selon l'une quelconque des revendications précédentes, comprenant un dispositif d'entraînement (12) à rouleaux de pincement destiné à déplacer le substrat (10) par rapport aux jets d'encre et au support d'impression (16), et dans lequel le dispositif d'ajustement de température comprend un second dispositif refroidisseur thermoélectrique (35) aligné sur le dispositif (12) à rouleau de pincement dans la direction de déplacement du substrat de manière que l'encre thermofusible appliquée sur une partie du substrat soit refroidie avant son contact avec le dispositif à rouleaux de pincement.

6. Appareil selon l'une quelconque des revendications précédentes, comprenant un boîtier étanche (17) entourant le support d'impression (16), une pompe à vide (21) communiquant avec l'intérieur du boîtier étanche, et une ouverture (18, 19) formée dans le boîtier étanche (17) et destinée à retenir le substrat en contact thermique avec le support d'impression.

7. Appareil selon l'une quelconque des revendications précédentes, comprenant un radiateur (30) qui est en contact thermique avec la pompe à chaleur (28) afin qu'il reçoive la chaleur de celle-ci et la dissipe.

8. Appareil selon la revendication 7, dans lequel le radiateur (30) est un organe résistant qui supporte le support d'impression et comprend un dispositif (32) de refroidissement par circulation forcée d'air destiné à refroidir le radiateur.

9. Appareil selon la revendication 7 ou 8, dans lequel le radiateur (30) possède des ailettes (31) destinées à faciliter le refroidissement du radiateur.

10. Appareil selon l'une quelconque des revendications précédentes, comprenant un dispositif (34) de commande de système destiné à commander le fonctionnement des jets d'encre et commandé par un signal de commande provenant du dispositif de réglage de température afin qu'il change la vitesse de fonctionnement du dispositif à jets d'encre.

11. Appareil selon l'une quelconque des revendications précédentes, dans lequel le support d'impression a une surface courbe (44) et un dispositif de retenue du substrat au contact de la surface courbe du support d'impression.

12. Appareil selon la revendication 11, dans lequel la surface courbe (44) du support d'impression a un rayon de courbure compris entre environ 12,7 et 25,4 cm, et elle est disposée sur au moins 10° environ avant l'emplacement de la pompe à chaleur (45) et 10° après cet emplacement.

13. Appareil selon l'une quelconque des revendications précédentes, dans lequel le dispositif (22, 23, 24, 28) de réglage de température maintient la température du support d'impression (16) à une température choisie au-dessous de la température de fusion de l'encre thermofusible.

14. Appareil selon la revendication 13, dans lequel la température choisie est inférieure d'environ 20 à 30 °C à la température de fusion de l'encre thermofusible.

15. Appareil selon l'une quelconque des revendications précédentes, dans lequel la température de fusion de l'encre thermofusible est d'environ 60 °C.

16. Appareil selon l'une quelconque des revendications 1 à 14, dans lequel la température choisie est d'environ 40 °C.
